(19) Europäisches Patentamt
European Patent Office
Office européen des brevets

(11) **EP 1 394 526 B1**

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(51) Int Cl.:
***G01M 15/00*** *(2006.01)*

(21) Anmeldenummer: **02019455.1**

(22) Anmeldetag: **30.08.2002**

(54) **Verfahren zur Bewertung der Betriebsbedingungen einer Maschine oder einer Anlage**

Method for the evaluation of the operating conditions of an engine or installation

Procédé d'évaluation des conditions de fonctionnement d'une machine ou installation

(84) Benannte Vertragsstaaten:
**DE ES FR GB IT**

(43) Veröffentlichungstag der Anmeldung:
**03.03.2004 Patentblatt 2004/10**

(73) Patentinhaber: **SIEMENS AKTIENGESELLSCHAFT**
**80333 München (DE)**

(72) Erfinder: **Adam, Gottfried**
**53819 Neunkirchen-Seelscheid (DE)**

(56) Entgegenhaltungen:
**US-A- 4 590 562**

EP 1 394 526 B1

**Beschreibung**

Die Erfindung betrifft ein Verfahren zur Bewertung der Betriebsbedingungen einer Maschine oder einer Anlage.

Bisher wurden zur Bewertung der Betriebsbedingungen einer Maschine oder einer Anlage visuelle Extrapolationen eines, bspw. kritischen, Messwertverlaufs und/oder subjektive Bewertungen der Auswirkungen auf Parameter der Maschine oder der Anlage vorgenommen, um Betriebsbedingungen einer Maschine oder einer Anlage abzuschätzen und entsprechend zu reagieren, indem der Parameter entsprechend der Bewertung bspw. durch Vorgabe eines Sollwertes für Parameter verändert oder in sonstiger Art und Weise beeinflusst wird.

Dabei wurden Anpassungs-/Regressionsfunktionen einer Datenbasis angepasst und eine Optimierung durch iterative Auswahl von Kurvenfunktionen, welche den maximalen Korrelationskoeffizienten aufweist, durchgeführt.

Der Krümmungsverlauf einer derart angepassten Kurve muss nicht zwingend mit dem der Datenbasis übereinstimmen. Der Korrelationskoeffizient r (maximaler Wert = 1, minimaler Wert = - 1) ist als Anpassungsgütekriterium nur bedingt brauchbar, da dieser Wert nicht nur von der Anpassungsgüte der angewendeten Kurvenfunktion abhängt, sondern auch von der Steigung der verwendeten Kurvenfunktion. Läuft die Steigung z.B. einer linearen Anpassung gegen null, folgt dieser Tendenz auch r, unabhängig von der Streuung der einzelnen Kurvenpunkte.

Somit ist r als Gütemaß für eine Extrapolation nicht brauchbar.

Werkzeuge zur Generierung für die Bewertung der Betriebsbedingungen einer Maschine oder Anlage müssen bestimmte Mindestanforderungen erfüllen, damit eine Bewertung des Extrapolationsergebnisses hinsichtlich der

- •   Vorhersagezuverlässigkeit
- •   Einflussgrößen auf eine Vorhersagesicherheit
- •   Nachvollziehbarkeit der Vorhersage möglich ist.

Naturgemäß ist jede Vorhersage mit Unsicherheiten behaftet und deren Gütemaß zur Beurteilung von prognostizierten Alarmen/Grenzwertüberschreitungen sowie als Entscheidungsbasis für daraus resultierende bspw. automatisierte Aktionen außerordentlich wichtig.

Darüber hinaus kann bei einem zyklisch generierten Verfahren zur Bewertung der Betriebsbedingungen einer Maschine oder Anlage eines bestimmten, z.B. messtechnischen Zusammenhangs die zeitliche Entwicklung eines Gütemaßes wiederum als Trend betrachtet werden und damit zusätzliche Aufschlüsse über den Eintreffzeitpunkt des prognostizierten Ereignisses, z.B. einer Grenzwertüberschreitung, geben, um eine Betriebssicherheit der Maschine oder der Anlage zu gewährleisten.

Die Einschätzung der Zuverlässigkeit einer Extrapolation besitzt zentrale Bedeutung, da Bewertungen von Schadenssymptomen, Grenzwertüberschreitungen und Betriebsoptimierungen, z.B. Ersatz von Verbrauchsteilen, ohne Kenntnis der Vorhersagezuverlässigkeit, also des Gütemaßes kaum möglich sind.

Eine Bewertung der Betriebsbedingungen einer Maschine oder einer Anlage, bei dem ein Trend der weiteren Entwicklung von Parametern analysiert wird, ist sehr wichtig im Zusammenhang mit Problemlösungen bei Aufgabenstellungen wie Betriebsmonitoring oder Systemanalyse.

Diese Verfahren werden überall dort eingesetzt, wo Extrapolationen in unbekannte Wertebereiche aus bekannten Gesetzmäßigkeiten heraus von Bedeutung sind, also im wesentlichen bei Ereignisprediktionen (Erkennung zukünftiger Alarme/Überschreitung von Belastungsgrenzen) und Schadenspräventionen (Erkennung zukünftiger Schäden).

Ähnlich wie bei Messwerten, diese sind ohne Angabe der Messtoleranz praktisch wertlos, muss einer Extrapolation eine Größe zugeordnet werden, welche Aufschluss über die Vorhersagequalität (Gütemaß) gibt. Ohne diese Information sind Extrapolationsergebnisse kaum bewertbar und daher Entscheidungen zu Folgeaktionen (z.B. Prozesseingriffe) höchst unsicher und u.U. kontraproduktiv.

Es ist daher Aufgabe der Erfindung dieses Problem zu beheben.

Ein Verfahren, wie im Oberbegriff des Anspruchs 1 dargestellt wird, ist aus dem Dokument US-A-4 590 562 bekannt.

Die Aufgabe wird durch ein Verfahren gemäss Anspruch 1 gelöst.

Weitere vorteilhafte Ausgestaltungen sind in den Unteransprüchen aufgelistet.

Die optimale Anpassung der Extrapolationsfunktion an die Datenbasis erfolgt nicht durch einen maximalen Korrelationskoeffizienten r, sondern mit Hilfe eines Gütemaßes K, welches von der Steigung einer Anpassungskurve an eine Datenbasis unabhängig ist.

Aus mindestens zwei verschiedenen Unterkriterien wird das Gütemaß K berechnet, welches Aufschluss über die Vorhersagequalität der Extrapolation erteilt. Die Existenz von K ermöglicht zumindest zwei Extrapolationsmodi:

• Vorgabe eines konstanten Gütemaßes K

In diesem Falle ist die Extrapolationsweite, d.h. der Abstand zwischen dem letzten Wert der Datenbasis und einem Endpunkt der Extrapolation, variabel.

Diese Vorgehensweise ist wichtig bei der Unterdrückung von Fehl- oder unbedeutenden Alarmen. Hier kann einem Operateur einer technischen Anlage mitgeteilt werden, über welchen Zeitraum kein Alarm auftreten wird, d.h. eine bestimmte Betriebssicherheit gegeben ist.

• Vorgabe einer Extrapolationsweite (z.B. bei Grenzwertüberschreitung)

In diesem Falle ist K variabel. Die zeitliche Entwicklung von K kann wiederum als Basis für eine Trendanalyse benutzt werden, um den wahrscheinlichen Eintreffzeitpunkt des Ereignisses bei K = 1 abzuschätzen.

Trendanalysen, um die Betriebsbedingungen einer Maschine oder Anlage zu bewerten, können ganz allgemein die Entwicklung zweier korrelierter Größen in noch unbekannte Wertebereiche extrapolieren. Ihre Anwendung kann sowohl auf zeitliche Entwicklungen

$$y_i = f(t_i); \qquad i = 1...n$$

Beispiel: $P_{el} = f(t)$; $P_{el}$ = Generatorleistung
und auf formal zeitunabhängige Zuordnungen

$$y_{1i} = f(y_{2i}); \qquad i = 1...n, \quad y_1 \text{ mit } y_2 \text{ synchron}$$

Beispiel: $P_{el} = f(Brennstoffmassenstrom)$ angewendet werden.

Der Einsatz von Trendanalysen unterstellt allerdings implizit, dass sich die aus der Vergangenheit ableitbare Gesetzmäßigkeit der Entwicklung zweier korrelierter Größen auch in der Zukunft fortsetzt und sich auf diese Weise noch unbekannte Wertezuordnungen generieren lassen. Diese Bedingung setzt für sinnvolle Trendanalysen voraus, dass diese nur mit Verläufen generiert werden können, welche unter identischen ('normalisierten') Randbedingungenphysikalische Umweltbedingungen, Brennstoff, Leistung, Betriebsmodus Brenner usw. - generiert wurden. Die Bereitstellung solch normalisierter Wertezuordnungen kann entweder durch Datenselektion mit Hilfe logischer Bedingungen (Diskrete Normalisierung) oder mit Hilfe eines Prozesssimulationsmodells (analytische Normalisierung) erfolgen, welches z. B. alle umgebungsabhängigen Werte auf ISO-Bedingungen zurückrechnen kann.

Es zeigen:

    Figur 1 eine Datenbasis und Extrapolationskurve,
    Figur 2 Kurven zur Bestimmung von $\Delta I$
    Figur 3 eine Segmentierung einer Datenbasis,
    Figur 4 einen zeitlichen Verlauf von K,
    Figur 5 eine Turbine mit Bauteilen,
    Figur 6 in vereinfachter Darstellung einen Längsschnitt einer Turbine, und
    Figur 7 eine Turbinenschaufel als ein Bauteil.

Basisgrößen zur Berechnung zum Gütemaß K

Das Gütemaß K ist ein Maß für die Güte einer Extrapolation. Sie verknüpft mehrere Fehlereinflüsse und ist daher eine Funktion zumindest zweier Variabler z. B. V, $\Delta I$.
In diesem Falle sind dies bspw. ein Verhältnis V, eine x-Unschärfe $\Delta I$, eine Stetigkeit S und eine zeitliche Konstanz C:

$$K = f(V, \Delta I, S, C).$$

Diese Größen werden bspw. so verknüpft, dass sich der Wertevorrat von K innerhalb eines normierten Bereiches, z.B. 0% bis 100% befindet.

• Verhältnis V des Datenbereiches zum Extrapolationsbereich

V wird bspw. wie folgt berechnet:

$$V = (x_n - x_1)/(x_S - x_1).$$

Trägt V wesentlich zu einer Reduzierung des Gütemaßes K bei, kann schrittweise die Datenbasis der Extrapolation erweitert werden.

• Unschärfe $\Delta I$ der Anpassungskurve in x-Richtung

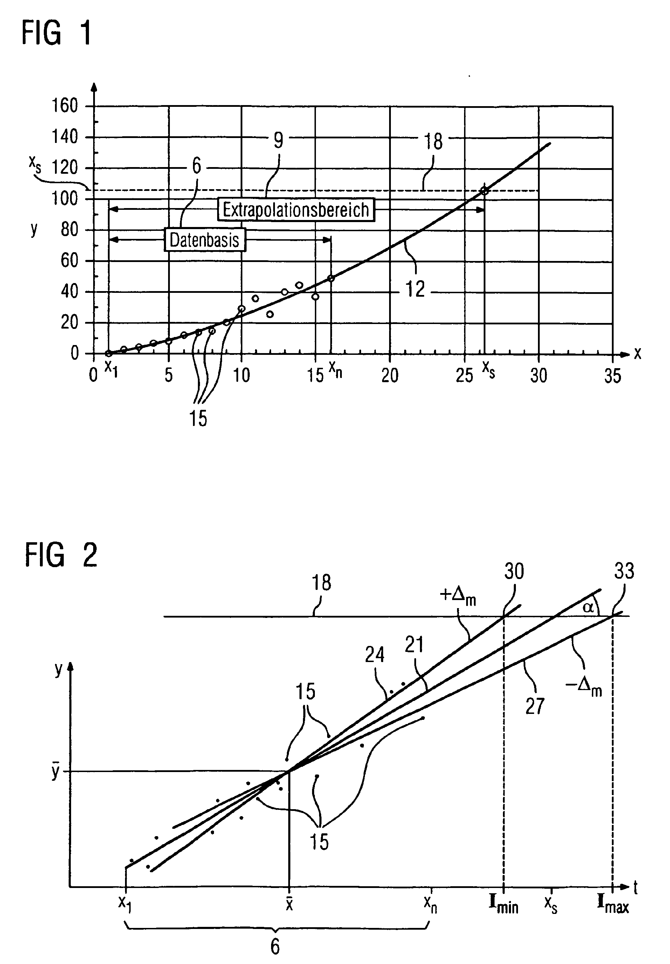

Jede Kurvenanpassung (Voraussetzung zur Extrapolation) besitzt naturgemäß auch eine Unschärfe (Vertrauensbereich) der berechneten Kurvenparameter.
Um die Unschärfe der Steigung zu bestimmen, wird in der Figur 2 bspw. eine lineare Regressionsfunktion 21 verwendet. Generell können als Extrapolationsfunktionen alle Funktionen verwendet werden, welche sich in lineare Strukturen überführen lassen, also

| | | |
|---|---|---|
| Lineare Funktion (Stammfunktion) | $\rightarrow$ | $y = a_0 + a_1 * x$ |
| Potenzfunktion | $\rightarrow$ | $\ln y = \ln a_0 + a_1 * \ln x$ |
| Logarithmische Funktion | $\rightarrow$ | $y = a_0 + a_1 * \ln x$ |
| Exponentielle Funktion | $\rightarrow$ | $\ln y = \ln a_0 + a_1 * x$ |

u.a..

Die Unschärfe $\Delta I$ wird dann wie folgt berechnet.

Figur 2 zeigt eine beispielhafte Datenbasis 6 mit einer Extrapolationskurve 21 und mit weiteren Kurven 24, 27 zur Berechnung von $\Delta I$.

Die Unschärfe $\Delta I$ kann durch Drehung der Anpassungskurve 21 (in linearer Darstellung) um einen Drehpunkt $(\bar{x}, \bar{y})$ dargestellt werden. Die Mittelwerte $\bar{x}$ und $\bar{y}$ sind bspw. durch geometrische oder arithmetische Mittel bestimmt worden. Der Punkt $(\bar{x}, \bar{y})$ muss nicht zwingend auf der linearen Anpassungskurve 21 (Extrapolationskurve) liegen.
Die Unschärfe einer Steigung der linearen Kurve 21 entspricht einer Winkeldrehung, bei der die Steigung m um $\pm \Delta m$ variiert wird und damit einer x-Unschärfe $\Delta I$ der Anpassungskurve u.a. in x-Richtung (Fig. 2).
Durch die Variation der Steigungen ergeben sich zwei weitere Kurven 24, 27, die mit einer Parallelen 18 (ys=konstant), die einem Grenzwert entspricht, jeweils einen Schnittpunkt 30, 33 bilden. Zu jedem Schnittpunkt 30, 33 gibt es einen entsprechenden x-Wert $I_{max}$ und $I_{min}$, wobei $I_{max} > I_{min}$ ist und $\Delta I = I_{max} - I_{min}$.
Diese x-Unschärfe korreliert mit einem Schnittwinkel $\alpha$, der sich bestimmt aus dem Winkel zwischen der Parallelen 18 und der Kurve am Schnittpunkt der Extrapolationskurve 21 und der Parallelen 18. Die x-Unschärfe $\Delta I$ verstärkt sich mit abnehmendem Schnittwinkel $\alpha$. Ist bei einer Extrapolation kein Grenzwert vorhanden bzw. wird keiner überschritten, gilt das oben gesagte für den vorgegebenen x-Endpunkt $(x_S)$ der Extrapolation und einer gedachten Parallelen zur x-Achse, welche durch den Punkt $(x_S, y_S)$ läuft.
Da die Extrapolationsfunktion immer analytisch vorliegt, kann mit Hilfe der ersten Ableitung der Schnittwinkel $\alpha$ zwischen einer Waagerechten oder Alarmfunktion und der Extrapolationsfunktion berechnet werden.

Der Ansatz zur Berechnung der Steigungsunschärfe $\pm \Delta m$ ist bspw. wie folgt:
Eine Steigung b wird mittels eines Konfidenzintervalls bestimmt. Ein solches Verfahren ist aus Kreyszig, Erwin: "Statistische Methoden und ihre Anwendungen", Verlag Vandenhoeck und Ruprecht, Göttingen, Seite 270 bekannt.

Zur Bestimmung der Steigung b wird wie folgt vorgegangen:

a) Eine Datenbasis 6 wird festgelegt. Die Datenbasis 6 umfasst n korrelierte x- und y-Werte (Fig. 2)

b) Berechnung von $\bar{x}$ und $\bar{y}$ der Datenbasis 6 sowie der Größe $\sum x_i y_i$

c) Berechnung von $S_{xy} = \dfrac{1}{n-1} \left( \sum x_i y_i - \overline{nxy} \right)$ $(i=1..n)$

d) Berechnung von $S_{x^2} = \dfrac{1}{n-1} \left( \sum x_i - \bar{x} \right)'$ $(i=1..n)$

e) Berechnung von $S_y{}^2 = \dfrac{1}{n-1}(\sum y_i - \overline{y})^2$ $\quad$ (i=1..n)

f) die Steigung b ergibt sich aus $\quad b = \dfrac{S_{xy}}{S_x{}^2}$

g) Berechnung von $\quad a = (n-1)(s_y^2 - b^2 s_x^2)$

Somit ergibt sich die Gleichung der Regressionsgeraden 21 $\quad y = \overline{y} + b(x - \overline{x})$ .

Als nächstes wird eine Konfidenzzahl von bspw. 95% vorgegeben, d.h. $\gamma = 0,95$, woraus eine Grösse F (c) berechnet wird:

h)

$$F(c) = \frac{1}{2}(1 + \gamma) = 0,975$$

i) mit F(c) = 0,975 und n-2 (n = Anzahl Messwerte) Freiheitsgrade liefert die t-Verteilung (Student-Verteilung) einen Wert c
(0,975 entspricht dem Integral der t-Verteilung bis an die Stelle x=c).
$\Delta$m ergibt sich aus

j)

$$\frac{c\sqrt{a}}{S_x \sqrt{(n-1)(n-2)}} .$$

Somit ergibt sich eine Unschärfe der Steigung m:

$$b - \Delta m \leq m \leq b + \Delta m .$$

Berechnet wird damit die x-Unschärfe $\Delta$l der Steigung m im Drehpunkt (Fig. 2) in Abhängigkeit der Streuungskenngrößen der aktuellen Datenbasis 6.
Damit ist $\Delta$l = f($\Delta$m, $\alpha$) mittels Strahlensatz oder Goniometrie berechenbar.
Eine Normierung von $\Delta$l kann ebenso erfolgen.

• Stetigkeit S der y-Werte der Datenbasis

Eine Segmentierung einer Datenbasis 6 erteilt vorab Aufschluss über die aktuelle Krümmungsrichtung der verwendeten Datenbasis 6.
Die Datenbasis 6 ist eine echte oder unechte Teilmenge eines Datenvorrats 54, der alle verfügbaren Messpunkte 15 umfasst.
Eine Segmentierung bedeutet, dass Messpunkte, also Zahlentupel (x,y) der Datenbasis 6 in zumindest drei Segmente 45, 48, 52 aufgeteilt werden. Für jedes Segment 44, 48, 52 wird eine lineare Anpassungskurve 36, 39, 42 bestimmt.
Die Krümmungsrichtung der Datenbasis 6 wird durch Bildung von Segmentmittelwerten g1, g2 und g3 und Berechnung der zweiten numerischen Ableitung bestimmt.

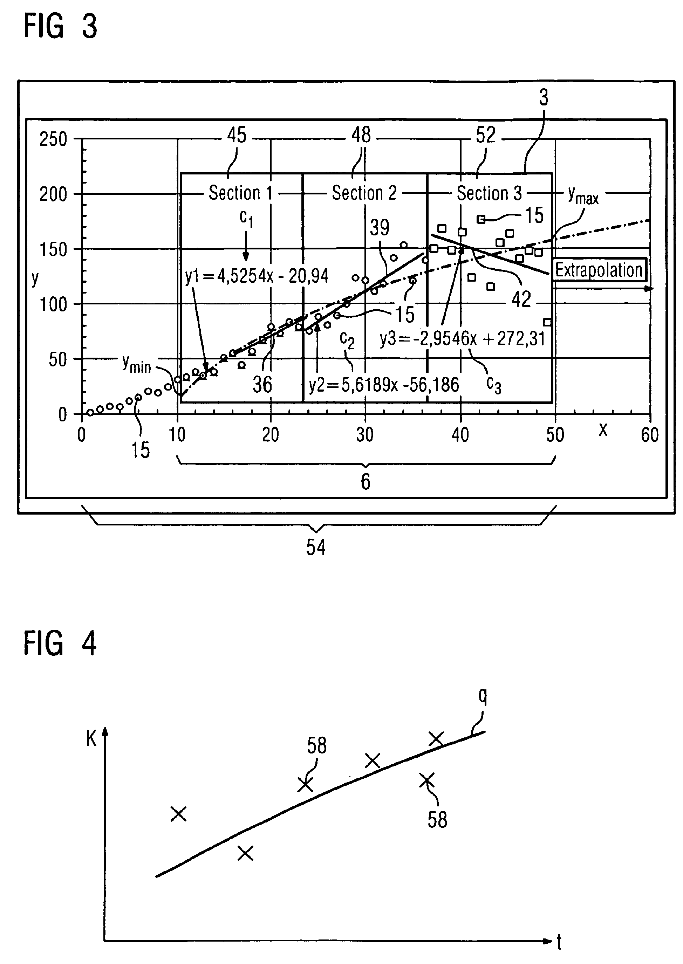

Bei diesem Verfahren kann davon ausgegangen werden, dass die Berechnung der Anpassungskurve (Extrapolationskurve) zyklisch aus einer gleitenden Datenbasis 6 erfolgt, d.h. ein Datenfenster 3 (Fig. 3) konstanter oder variabler Länge wird nach jedem abgeschlossenen Extrapolationszyklus in Richtung zunehmender x-Größen um ein jeweils vorgegebenes Intervall $\Delta x$ (unabhängige Variable) verschoben.

In der Praxis kann der Vorschub $\Delta x$ des Datenfensters 3, d.h. der Datenbasis 6, maximal in dem zeitlichen Zyklus erfolgen, mit welchem neue Messwerte 15 generiert werden (z.B. $\Delta x = 5$ s). Der Begriff der Stetigkeit S ist in diesem Zusammenhang nicht als mathematische Definition zu verstehen, sondern als das Maß der Veränderung des Punktverlaufes der Datenbasis 6 in Relation zum letzten abgeschlossenen Extrapolationsschritt. Um eine Aussage über die Stetigkeit der Y-Werteentwicklung und damit implizit eine Aussage über die Extrapolationsfähigkeit der Entwicklung machen zu können, wird das Datenfenster 3 (Fig. 3) in mindestens drei Segmente 45, 48, 52 unterteilt. Für jedes Segment 45, 48, 52 wird in einem Zwischenschritt je ein Mittelwert und je eine lineare Anpassungsfunktion $y_1$, $y_2$, $y_3$ mit den Steigungen $c_1$, $c_2$ und $c_3$ berechnet (Fig. 3). Bezeichnet man die Mittelwerte der drei Regressionsgeraden 36, 39, 42 mit $g_1$, $g_2$ (mittleres Segment) und $g_3$, so kann mit dem numerischen Krümmungsmaß p

$$p \ = \ g_1 \ - \ 2{*}g_2 \ + \ g_3$$

die aktuelle Krümmungsrichtung des Steigungsverlaufes bestimmt werden.

Im Beispiel von Figur 3 ist q negativ. Dies bedeutet eine Rechtskrümmung.

Bei p = 0 liegen die drei Mittelwerte auf einer Geraden. Aus einem Kurvenvorrat wird iterativ jener Kurventyp dem Wertebereich der gesamten aktuellen Datenbasis angepasst.

Anpassungsfunktionen (Regressionsfunktionen) des Kurvenvorrats für die Extrapolationskurve von Datenkorrelationen müssen die Bedingung des monotonen Verlaufes erfüllen, da nicht-monotone Funktionen zu erheblichen Extrapolationsunsicherheiten führen können. Generell sind alle Funktionen verwendbar, welche in lineare Strukturen der Form $y = a_0 + a_1{*}x$ überführbar sind, also

| | | |
|---|---|---|
| Lineare Funktion (Stammfunktion) | $\rightarrow$ | $f(x)=y = a_0 + a_1{*}x$ |
| Potenzfunktion | $\rightarrow$ | $f(x)=\ln y = \ln a_0 + a_1{*}\ln x$ |
| Logarithmische Funktion | $\rightarrow$ | $f(x)=y = a_0 + a_1{*}\ln x$ |
| Exponentielle Funktion | $\rightarrow$ | $f(x)=\ln y = \ln a_0 + a1{*}x$ |

u.a..

Der aus dem Kurvenvorrat ausgewählte Kurventyp muss folgende Bedingungen erfüllen:

die Krümmungsrichtung der Extrapolationskurve (Regressionsgeraden) muss mit der von p übereinstimmen der Quotient $Q_k$ aus Zähler = (ggf. gewichteter) Mittelwert der Abstandsquadrate zwischen Messwerten und Extrapolationskurve, und Nenner = Mittelwertquadrat des y-Wertebereiches der Extrapolationskurve im Bereich des Datenfensters (dabei ist beispielsweise $y^2_{mitt_k} = [(y_{max_k} + y_{min_k})/2]^2$, wobei ymax der maximale Y-Wert ist und ymin entsprechend der minimale Y-Wert der k-ten Kurve) und dient zur Normierung) muss minimal sein:

$$Q_k = f(k) = \frac{\sum w_i {*} (y_i(x_i) - f_k(x_i))^2}{y^2_{mitt_k} {*} \sum w_i} = \text{min} \quad (i = 1..\text{min}).$$

k ist dabei ein Zähler der verfügbaren Extrapolationskurventypen (Kurvenvorrat).

$y_i(x_i)$ ist der Messwert an der Stelle $x_i$.

$f_k(x_i)$ ist der Funktionswert des k-ten Extrapolationskurventyps an der Stelle $x_i$.

$w_i$ ist ein Wichtungsfaktor für jeden einzelnen Messwert oder für alle Messwerte eines Segments.

Die Bewertung der Stetigkeit S wird wie folgt vorgenommen:

Vergleich der drei Geradensteigungen $C_1$, $C_2$, $C_3$ mit den Steigungen der Extrapolationskurve an den jeweiligen Mittenpositionen ($X_{s1}$, $X_{s2}$, $X_{s3}$) der drei Segmente des Datenfensters. Eine unterschiedliche Wichtung der drei Steigungsdifferenzen ist hier möglich und sinnvoll. So können die aktuelleren Werte im letzten Segment stärker bewertet werden, um schneller eine Veränderung des Kurvenverlaufs zu erkennen.

Die drei Steigungsdifferenzen sind ein Maß für die Entwicklungsstetigkeit des Kurvenverlaufes.

S berechnet sich wie folgt:

$O_1$ bis $O_3$ sind die drei Steigungen der ausgewählten k-ten Anpassungskurve 36, 39, 42 an den jeweils halben Segmentsbreiten,

$C_1$ bis $C_3$ die Steigungen der linearen Segmentsanpassungen (Fig. 3).

Somit gilt:

$$S = \frac{\sum \gamma i * (C_1 - O_1)^2}{\sum \gamma_i}; \quad i = 1...3 \text{ (Segmentbereiche)}$$

mit $\gamma_i$: Wichtungsfaktoren 1...n.

Der Wertebereich von S ist wie folgt: 0 (abs. Stetigkeit), d.h. die Steigungen der Extrapolationsfunktion in den Segmentsmitten sind identisch mit den Regressionsgeraden der einzelnen Segmente 45, 48, 52 bis + ∞, d.h. keine Übereinstimmung der Steigungen.

• Zeitliche Konstanz C der Extrapolationen

Die zeitliche Varianz einer Folge von Extrapolationen ist ein zusätzlicher und wichtiger Indikator der Vorhersagesicherheit, da hohe Varianzbeträge z.B. des Gütemaßes von instabilen Extrapolationsbedingungen und daher fragwürdiger Aussagekraft zeugen können.

Die Abfrage der zeitlichen Konstanz einer Extrapolation kann bei Vorgabe eines festen Gütemaßes mit der variablen Extrapolationsweite ($x_s$) oder bei Fixierung der Extrapolationsweite - z. B. kann $x_s$ der Überschreitung eines festen Grenzwertes entsprechen - über die dann variable Konfidenzzahl erfolgen.

Figur 4 zeigt einen beispielhaften zeitlichen Verlauf des Gütemaßes K(t) mit verschiedenen Werten 58. Für diesen Werteverlauf wird eine Anpassungsfunktion q aus einem Kurvenvorrat ermittelt.

Die Berechnung der jeweiligen Variablen erfolgt iterativ z.B. mit dem Newton-Verfahren.

Die zeitliche Varianzüberwachung erfolgt mit Hilfe eines Regressionsfits (bspw. durch ein Polynom 1 oder höherer Ordnung, wobei die Ordnung abhängig ist von n) an die jeweils letzten n (z.B. n=10) zeitlichen Werte von Extrapolationsweiten bzw. Konfidenzzahlen. Auf diese Weise können auch sich zeitlich linear verändernde Werte der zu testenden Variablen präzise in ihrer Variabilität bewertet werden.

Die Bewertung der zeitlichen Varianz von Extrapolationsweite wird wie folgt berechnet:

$$C = \frac{\sum \gamma_i * (K(t_1) - q(t))^2}{q^2_{mitt_K} * \sum \gamma_i}$$

i = Anzahl der Iterationen.

Auch hier können Wichtungsfaktoren $\gamma_i$ die aktuellsten Werte anders/höher bewerten als die ältesten.

Dabei entspricht $q^2_{mitt_k}$ $y^2_{mitt_k}$.

Der Wertebereich von C liegt zwischen C= 0 (keine zeitliche Streuung der Variablen, alle Variablenpunkte liegen auf der Regressionsgeraden) und + ∞ (Variablenfolge verrauscht).

• Verknüpfung von V, $\Delta 1_{norm}$, S und C zum Gütemaß K

Das Gütemaß K verknüpft die Grössen V, $\Delta 1_{norm}$, S und C bspw. wie folgt:

$$K = \frac{V * \Delta I}{S * C}.$$

Der Wertebereich von K liegt zwischen 0 (Extrapolation verwerfen) und + ∞ (Extrapolation exakt).

Eine Normierung von K kann z.B. über eine nichtlineare Beziehung erfolgen:

$$K_{norm} = 1 - e^{-k} \; .$$

Bspw. ist die Anlage ein Rotor einer Gasturbine. Durch die Ermittelung von K des Parameters Frequenz des Rotors wird festgestellt, dass in einer bestimmten Zeit (xs-xn) eine unzulässige Grenzwertüberschreitung stattfinden wird. Daher wird die Frequenz runtergeregelt.

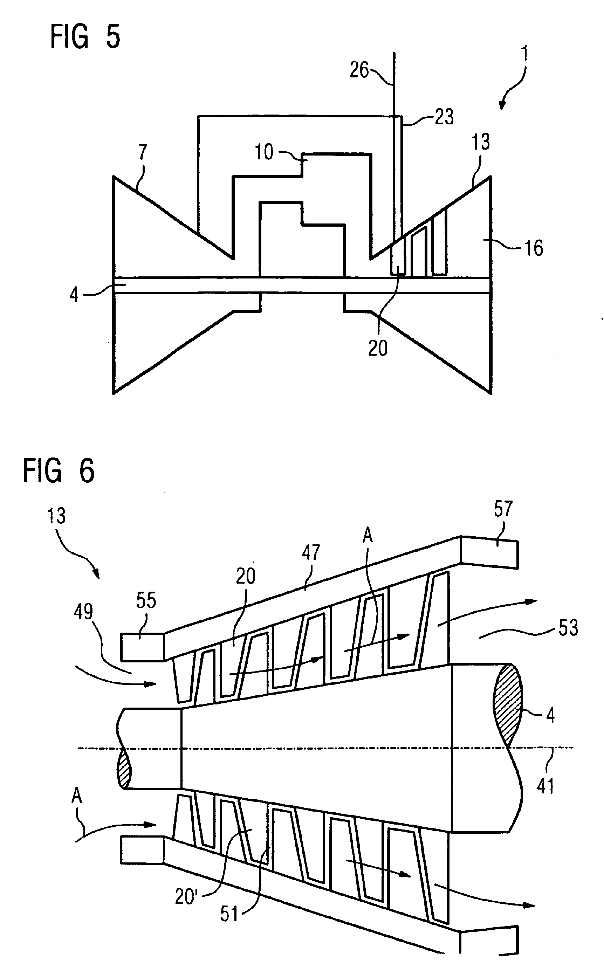

Figur 5 zeigt schematisch in einem Längsschnitt eine Gasturbine 1.

Als ein beispielhaftes Bauteil ist eine Gasturbine 1 ausgewählt für eine Maschine, bei der Parameter wie Temperatur, Schwingung, elektrische Leistung oder sonstiges Parameter gemessen werden.

Entlang einer Welle 4 sind ein Verdichter 7, eine Brennkammer 10 und ein Turbinenteil 13 hintereinander angeordnet. Das Turbinenteil 13 weist einen Heißgaskanal 16 auf. Im Heißgaskanal 16 sind Gasturbinenschaufeln 20 angeordnet. Leitschaufel- und Laufschaufelgrenze sind wechselnd aufeinanderfolgend vorgesehen.

Die Gasturbinenschaufeln 20 werden beispielsweise über eine kombinierte Luft- und/oder Dampfkühlung gekühlt. Dazu wird beispielsweise dem Verdichter 7 Verdichterluft entnommen und über eine Luftzuführung 23 den Gasturbinenschaufeln 22 zugeführt. Über eine Dampfzuführung 26 wird den Gasturbinenschaufeln 20 beispielsweise auch Dampf zugeführt.

In Figur 6 ist in vereinfachter Darstellung in einem Längsschnitt ein Ausschnitt eines Turbinenteils 13 gezeigt. Das Turbinenteil 13 weist eine Welle 4 auf, die sich entlang einer Rotationsachse 41 erstreckt.

Weiter weist das Turbinenteil 13 entlang der Rotationsachse 41 aufeinanderfolgend ein Einströmbereich 49, ein Beschaufelungsbereich 51 sowie ein Abströmbereich 53 auf.

In dem Beschaufelungsbereich 51 sind rotierbare Laufschaufeln 20 und feststehende Leitschaufeln 20 angeordnet. Die Laufschaufeln 20 sind dabei an der Welle 4 befestigt, während die Leitschaufel 20 an einem die Welle 4 umgehenden Leitschaufelträger 47 angeordnet sind.

Durch die Welle 4, den Beschaufelungsbereich 51 sowie den Leitschaufelträger 47 ist ein ringförmiger Strömungskanal für ein Strömungsmedium A, z.B. Heißdampf, gebildet.

Der zur Zufuhr des Strömungsmediums A dienende Einströmbereich 49 wird durch ein stromaufwärts des Leitschaufelträgers 47 angeordnetes Einströmgehäuse 55 in radialer Richtung begrenzt.

Ein Abströmgehäuse 57 ist stromabwärts am Leitschaufelträger 47 angeordnet und begrenzt den Abströmbereich 53 in radialer Richtung, dass heißt senkrecht zur Rotationsachse 41.

Während des Betriebs der Gasturbine 1 strömt das Strömungsmedium A von dem Einströmbereich 49 in den Beschaufelungsbereich 51, wo das Strömungsmedium unter Expansion Arbeit verrichtet, und verlässt danach über den Abströmbereich 53 die Gasturbine 1. Das Strömungsmedium A wird anschließend in einen dem Abströmgehäuse 57 nachgeschalteten in der Figur 5 nicht näher dargestellten Kondensator für eine Dampfturbine gesammelt.

Beim Durchströmen des Beschaufelungsbereichs 51 entspannt sich das Strömungsmedium A und verrichtet Arbeit an den Laufschaufeln 20, wodurch diese in Rotation versetzt werden.

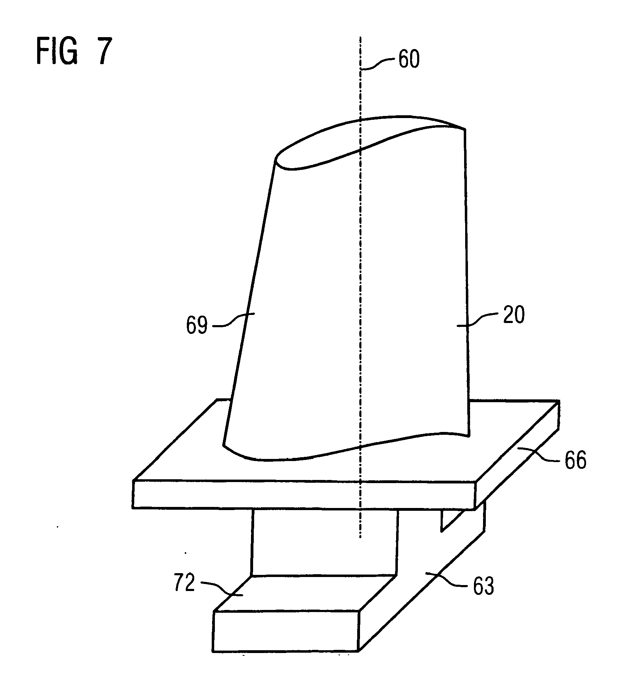

Figur 7 zeigt in perspektivischer Ansicht eine Laufschaufel 20, die sich entlang einer radialen Achse 60 erstreckt. Die Laufschaufel weist entlang der Radialachse 60 aufeinanderfolgend einen Befestigungsbereich 63, eine daran angrenzende Schaufelplattform 66 sowie ein Schaufelblattbereich 69 auf.

Im Befestigungsbereich 63 ist ein Schaufelfuß 72 gebildet, der zur Befestigung der Schaufel 20 an der Welle 4 einer Gasturbine 1 dient. Der Schaufelfuß 72 ist beispielsweise als Hammerkopf ausgestaltet.

Bei herkömmlichen Laufschaufeln 20 werden in allen Bereichen 63, 66, 69 massive metallische Werkstoffe verwendet. Die Laufschaufel 20 kann hierbei durch ein Gussverfahren, durch ein Schmiedeverfahren, durch ein Fräsverfahren oder Kombinationen daraus gefertigt sein. Dabei weist das Bauteil vielfach bereits unmittelbar nach der Herstellung Fehler auf.

**Patentansprüche**

1. Verfahren zur Bewertung der Betriebsbedingungen einer Maschine (1) oder Anlage,
   für die mindestens ein Parameter mehrfach gemessen wird, um eine Datenbasis (6) zu bilden,
   die aus Werten $(x_1,y_1)....(x_n,y_n)$ des Parameters besteht,
   wobei ein Gütemaß (K) einer Extrapolation auf Grundlage der Datenbasis (6) berechnet wird, **dadurch gekennzeichnet, daß** bei dem Verfahren das Gütemaß (K) eine Funktion von mindestens zwei Variablen der Gruppe V, $\Delta I$, S, C ist,
   wobei V ein Verhältnis des Wertebereichs der Datenbasis (6) zum Extrapolationsbereich xs ist,
   der bestimmt ist durch $x_s > x1$, $x_n$,

wobei $\Delta I$ die x-Unschärfe der Anpassungskurve (21) in x-Richtung ist,
wobei S die Stetigkeit als ein Maß der Veränderung der y-Werte der Datenbasis (6) und
C die zeitliche Konstant der Extrapolation ist.

**2.** Verfahren nach Anspruch 1,
**dadurch gekennzeichnet, dass**
die Bewertung der Betriebsbedingungen genutzt wird,
um in Abhängigkeit des Gütemaßes (K) entsprechend den Parameter zu beeinflussen.

**3.** Verfahren nach Anspruch 1 oder 2,
**dadurch gekennzeichnet, dass**
durch die Bewertung der Betriebsbedingungen die Betriebssicherheit der Maschine (1) oder der Anlage erhöht wird,
indem in Abhängigkeit des Gütemaßes (K) der Parameter entsprechend beeinflusst wird.

**4.** Verfahren nach Anspruch 1 oder 2,
**dadurch gekennzeichnet, dass**
die Bewertung der Betriebsbedingungen für eine Optimierung des Betriebs der Maschine (1) oder der Anlage
verwendet wird.

**5.** Verfahren nach Anspruch 3,
**dadurch gekennzeichnet, dass**
für den Parameter einen Grenzwert (18) vorgegeben wird, und dass ein Zeitraum ermittelt wird,
in dem keine Überschreitung des Grenzwertes (18) des Parameters auftritt.

**6.** Verfahren nach Anspruch 1,
**dadurch gekennzeichnet, dass**
die Auswahl der Variablen in der Weise getroffen wird, dass das Gütemaß (K) von der Steigung einer Anpassungskurve an die Datenbasis (6) unabhängig ist.

**7.** Verfahren nach Anspruch 1,
**dadurch gekennzeichnet, dass**
das Gütemaß (K) normiert ist, insbesondere durch $1-e^{-K}$.

**8.** Verfahren nach Anspruch 7,
**dadurch gekennzeichnet, dass**
das Gütemaß (K) auf einen Wertebereich von 0 bis 100 % normiert wird.

**9.** Verfahren nach Anspruch 1,
**dadurch gekennzeichnet, dass**
das Gütemaß (K) gegeben ist durch:

$$K \; = \; \frac{V * \Delta I}{S * C} \; .$$

**10.** Verfahren nach Anspruch 1 oder 9,
**dadurch gekennzeichnet, dass**
das Verhältnis (V) des Wertebereichs der Datenbasis (6) gegeben ist durch $(X_n - X_1) / (X_s - X_1)$.

**11.** Verfahren nach Anspruch 1,
**dadurch gekennzeichnet, dass**
die Datenbasis (6) in mindestens drei Segmente (45, 48, 52) unterteilt wird;
dass für jedes Segment (45, 48, 52) aus der Datenbasis (6) je ein Mittelwert $g_1$, $g_2$, $g_3$ und je eine lineare Anpassungsfunktion $y_1$, $y_2$, $y_3$ (36, 39, 42) mit den Steigungen $c_1$, $c_2$ und $c_3$ berechnet wird;
dass ein numerisches Krümmungsmaßes p

$$p = g_1 - 2*g_2 + g_3,$$

berechnet wird,
das die aktuelle Krümmungsrichtung des Steigungsverlaufes wiedergibt;
dass aus einem Kurvenvorrat von Kurventypen zumindest der Gruppe:

| | | |
|---|---|---|
| Lineare Funktion | $\rightarrow$ | $f(x)=y = a_0 + a_1*x$ |
| Potenzfunktion | $\rightarrow$ | $f(x)=lny= lna_0 + a_1*lnx$ |
| Logarithmische Funktion | $\rightarrow$ | $f(x)=y = a_0 + a_1*ln\ x$ |
| Exponentielle Funktion | $\rightarrow$ | $f(x)=ln\ y = ln\ a_0 + a_1x$ |

iterativ jener Kurventyp der Anpassungsfunktion ausgewählt und dem Wertebereich der gesamten aktuellen Datenbasis (6) angepasst wird,
wobei der aus dem Kurvenvorrat ausgewählte Kurventyp folgende Bedingungen erfüllen muss:

die Krümmungsrichtung der Kurve, die aus der Extrapolation ermittelt wird,
muss mit der von p übereinstimmen

und
der Quotient $Q_k$ aus Zähler (= ggf. gewichteter Mittelwert der Abstandsquadrate zwischen Messwerten und Extrapolationskurve) und Nenner (= Mittelwertquadrat des y-Wertebereiches der Extrapolationskurve im Bereich des Datenfensters) muss minimal sein:

$$Q_k = f(k) = \frac{\sum w_i * (y_i(x_i) - f_k(x_i))^2}{y^2_{mitt_k} * \sum w_i} = min \quad (i = 1..min)$$

wobei k ein Zähler der verfügbaren Kurventypen (Kurvenvorrat) für die Extrapolation ist,
insbesondere ist $y^2_{mitt_k} = [(y_{maxK} + y_{minK})/2]^2$,
wobei $y_i(x_i)$ der Messwert an der Stelle $x_i$ ist,
wobei $f_k(x_i)$ der Funktionswert des k-ten Kurventyps für die Extrapolation an der Stelle $x_i$ ist,
wobei $w_i$ ein Wichtungsfaktor für jeden einzelnen Messwert oder für alle Messwerte eines Segments ist;
so dass die Stetigkeit (S) sich wie folgt berechnet:

$$S = \frac{\sum \gamma i * (C_1 - O_1)^2}{\sum \gamma_i};$$

wobei i = 1...3 eine Numerierung für die Segmentbereiche ist,
wobei $\gamma_i$: Wichtungsfaktoren 1...n,
wobei $O_1$ bis $O_3$ die Steigungen der ausgewählten k-ten Kurve (36, 39, 42) für die Extrapolation an den jeweils halben Segmentbreiten sind, und
wobei $C_1$ bis $C_3$ die Steigungen der linearen Segmentsanpassungen sind.

12. Verfahren nach Anspruch 1,
**dadurch gekennzeichnet, dass**
die x-Unschärfe wie folgt bestimmt wird:

Auswahl einer Extrapolationsfunktion, welche sich in lineare Strukturen überführen lässt, also
zumindest aus der Gruppe

| Lineare Funktion | $\rightarrow$ | $y = a_0 + a_1 * x$ |
|---|---|---|
| Potenzfunktion | $\rightarrow$ | $\ln y = \ln a_0 + a_1 * \ln x$ |
| Logarithmische Funktion | $\rightarrow$ | $y = a_0 + a_1 * \ln(x)$ |
| Exponentielle Funktion | $\rightarrow$ | $\ln y = \ln a_0 + a_1 * x,$ |

ausgewählt wird,
Festlegung einer Datenbasis (6),

wobei die Datenbasis (6) n korrelierte x- und y-Werte umfasst
Berechnung von $\bar{x}$ und $\bar{y}$ der Datenbasis (6) sowie der Größe $\Sigma x_i y_i$

Berechnung von
$$S_{xy} = \frac{1}{n-1}\left(\sum x_i y_i - \overline{nxy}\right) \quad (i = 1..n)$$

Berechnung von
$$S_x{}^2 = \frac{1}{n-1}\left(\sum x_i - \bar{x}\right)^2 \quad (i = 1..n)$$

Berechnung von
$$S_y{}^2 = \frac{1}{n-1}\left(\sum y_i - \bar{y}\right)^2 \quad (i = 1..n)$$

Berechnung einer Steigung
$$b = \frac{S_{xy}}{S_x{}^2}$$

Berechnung von
$$a = (n-1)\left(s_y^2 - b^2 s_x^2\right),$$

Bestimmung einer Gleichung einer Regressionsgeraden

$$y = \bar{y} + b(x - \bar{x}) \quad ,$$

mit einer Konfidenzzahl $\gamma$ wird eine Grösse F (c) berechnet

$$F(c) = \frac{1}{2}(1 + \gamma),$$

mit F(c) und n-2 (n = Anzahl Messwerte) Freiheitsgrade liefert die t-Verteilung (Student-Verteilung) einen Wert c, Bestimmung von $\Delta m$

$$\frac{c\sqrt{a}}{S_x \sqrt{(n-1)(n-2)}},$$

wodurch sich eine Unschärfe der Steigung m ergibt:

$$b - \Delta m \leq m \leq b + \Delta m,$$

Bestimmung der Geradegleichungen (27, 21) mit den Steigungen b - $\Delta$m, b + $\Delta$m,
Bestimmung der Schnittpunkte ($I_{min}$, konstant) und ($I_{max}$, konstant) der Geraden mit einer Parallelen (18) (y=konstant),
die einem Grenzwert (18) entspricht,
Bestimmung entsprechender x-Werte $I_{max}$ und $I_{min}$,
wobei $I_{max}$ > $I_{min}$ ist,
Berechnung von $\Delta I = I_{max} - I_{min}$.

13. Verfahren nach Anspruch 11,
**dadurch gekennzeichnet, dass**
der Wertebereich der Stetigkeit (S) im Bereich 0 und + $\infty$ liegt.

14. Verfahren nach Anspruch 1,
**dadurch gekennzeichnet, dass**
sich das Gütemaß (K) mit der Zeit verändert, und dass eine Bewertung der zeitlichen Varianz von Extrapolationsweite (C) wie folgt berechnet wird:

$$ C \; = \; \frac{\sum \gamma_i * (K(t_1) - q(t))^2}{q^2_{mitt_K} * \sum \gamma_i} $$

wobei i eine Anzahl der Iterationen ist,
wobei $q^2_{mitt_k} = [(q_{max_K} + q_{min_K})/2]^2$ ist,
wobei $\gamma_i$ ein Wichtungsfaktor ist.

## Claims

1. Method for evaluating the operating conditions of a machine (1) or installation for which at least one parameter is multiply measured in order to form a database (6) which consists of values ($x_1$, $y_1$) ... (xn, yn) of the parameter, a quality measure (K) of an extrapolation being calculated on the basis of the database (6), **characterized in that** in the method the quality measure (K) is a function of at least two variables of the group V, $\Delta$I, S, C,
   V being a ratio of the value range of the database (6) to the extrapolation range xs which is determined by $x_s$ > x1, $x_n$,
   $\Delta$I being the x-unsharpness of the adaptation curve (21) in the x-direction,
   S being the continuity as a measure of the variation in the y-values of the database (6), and
   C being the temporal constancy of the extrapolation.

2. Method according to Claim 1, **characterized in that** the evaluation of the operating conditions is used in order to influence the parameter appropriately as a function of the quality measure (K).

3. Method according to Claim 1 or 2, **characterized in that** the evaluation of the operating conditions raises the operational reliability of the machine (1) or of the installation by virtue of the fact that the parameter is appropriately influenced as a function of the quality measure (K).

4. Method according to Claim 1 or 2, **characterized in that** the evaluation of the operating conditions is used for an optimization of the operation of the machine (1) or of the installation.

5. Method according to Claim 3, **characterized in that** a limiting value (18) is prescribed for the parameter, and **in that** a time interval is determined in which no overshooting of the limiting value (18) of the parameter occurs.

6. Method according to Claim 1, **characterized in that** the variables are selected in the way that the quality measure (K) is independent of the gradient of an adaptation curve to the database (6).

7. Method according to Claim 1, **characterized in that** the quality measure (K) is normalized, in particular by $1-e^{-K}$.

8. Method according to Claim 7, **characterized in that** the quality measure (K) is normalized to a value range from 0 to 100%.

9. Method according to Claim 1, **characterized in that** the quality measure (K) is given by:

$$K \ = \ \frac{V * \Delta I}{S * C}$$

10. Method according to Claim 1 or 9, **characterized in that** the ratio (V) of the value range of the database (6) is given by $(X_n - X_1) / (X_s - X_1)$.

11. Method according to Claim 1, **characterized in that** the database (6) is subdivided into at least three segments (45, 48, 52);
    **in that** for each segment (45, 48, 52) from the database (6) in each case a mean value $g_1$, $g_2$, $g_3$ and in each case a linear adaptation function $y_1$, $y_2$, $y_3$ (36, 39, 42) with the gradients c1, c2 and c3 is calculated;
    **in that** a numerical measure of curvature p

$$p \ = \ g_1 \ - \ 2*g_2 \ + \ g_3$$

is calculated which expresses the current direction of curvature of the gradient profile; and
**in that** that curve type of the adaptation function is selected from a family of curves of curve types at least of the following group:

| | | |
|---|---|---|
| linear function | $\rightarrow$ | $f(x) = y = a_0 + a_1{}^*x$ |
| power function | $\rightarrow$ | $f(x) = \ln y = \ln a_0 + a_1{}^*\ln x$ |
| logarithmic function | $\rightarrow$ | $f(x) = y = a_0 + a_1{}^*\ln x$ |
| exponential function | $\rightarrow$ | $f(x) = \ln y = \ln a_0 + a_1 x$ |

in an iterative fashion and is adapted to the value range of the entire current database (6),
the curve type selected from the family of curves having to fulfil the following conditions:

the direction of curvature of the curve which is determined from the extrapolation must correspond to that of p, and
the quotient $Q_k$ of numerator (= if appropriate, weighted mean value of the squared distances between measured values and extrapolation curve) and denominator (= mean square of the y-value range of the extrapolation curve in the region of the data window) must be a minimum:

$$Q_k = f(k) = \frac{\sum w_i * (y_i(x_i) - f_k(x_i))^2}{y^2{}_{mitt_k} * \sum w_i} \ = \ \text{min} \quad (i \ = \ 1..\text{min})$$

k being a counter of the available curve types (family of curves) for the extrapolation, in particular $y^2{}_{mitt_k} = [(ymax_k + ymin_k)/2]^2$,
$y_i(x_i)$ being the measured value at the point $x_i$,
$f_k(x_i)$ being the functional value of the kth curve type for the extrapolation at the point $x_i$,
$w_i$ being a weighting factor for each individual measured value or for all measured values of a segment;
such that the continuity (S) is calculated as follows:

$$S = \frac{\sum \gamma_i * (C_1 - O_1)^2}{\sum \gamma_i};$$

i = 1...3 being an enumeration for the segment regions,

$\gamma_i$ being weighting factors 1...n,

$O_1$ to $O_3$ being the gradients of the selected kth curve (36, 39, 42) for the extrapolation at the respective half segment widths, and

$C_1$ to $C_3$ being the gradients of the linear segment adaptations.

12. Method according to Claim 1, **characterized in that** x-unsharpness is determined as follows:

Selecting an extrapolation function which can be converted into linear structures, that is to say a selection is made at least from the group of

| linear function | $\rightarrow$ | $y = a_0 + a_1 * x$ |
| power function | $\rightarrow$ | $\ln y = \ln a_0 + a_1 * \ln x$ |
| logarithmic function | $\rightarrow$ | $y = a_0 + a_1 * \ln(x)$ |
| exponential function | $\rightarrow$ | $\ln y = \ln a_0 + a_1 * x,$ |

establishing a database (6),

the database (6) comprising n correlated x- and y-values,

calculating $\bar{x}$ and $\bar{y}$ of the database (6) as well as the variable $\Sigma x_i, y_i,$

calculating $S_{xy} = \dfrac{1}{n-1}\left(\sum x_i y_i - \overline{nxy}\right)$ $(i=1..n)$

calculating $S_{x^2} = \dfrac{1}{n-1}\left(\sum x_i - \bar{x}\right)^2$ $(i=1..n)$

calculating $S_{y^2} = \dfrac{1}{n-1}\left(\sum y_i - \bar{y}\right)^2$ $(i=1..n)$

calculating a gradient $b = \dfrac{Sxy}{Sx^2},$

calculating $a = (n-1)(S_y^2 - b^2 S_x^2),$

determining an equation of a regression line, $Y = \bar{y} + b(x - \bar{x}),$ a variable F(c) is calculated with the aid of a confidence number $\gamma$

$$F(c) = \frac{1}{2}(1+\gamma),$$

the t distribution (Student's distribution) supplies a value c with the aid of F(c) and n-2 (n = number of measured values) degree of freedom,
determining $\Delta m$

$$\frac{c\sqrt{a}}{S_x\sqrt{(n-1)(n-2)}},$$

an unsharpness of the gradient m thereby being yielded:

$$b - \Delta m \leq m \leq b + \Delta m,$$

determining the line equations (27, 21) with the aid of the gradients b - $\Delta m$, b + $\Delta m$,
determining the points of intersection ($I_{min}$, constant) and ($I_{max}$ constant) of the straight line with a parallel line (18) (y = constant) which corresponds to a limiting value (18),
determining corresponding x-values $I_{max}$ and $I_{min}$, in which case $I_{max} > I_{min}$, and
calculating $\Delta I = I_{max} - I_{min}$.

13. Method according to Claim 11, **characterized in that** the value range of the continuity (S) lies in the range of 0 to + ∞.

14. Method according to Claim 1, **characterized in that** the quality measure (K) varies with time, and **in that** an evaluation of the temporal variance of the extrapolation width (C) is calculated as follows:

$$C = \frac{\sum \gamma_i * (K(t_1) - q(t))^2}{q^2{}_{mitt_K} * \sum \gamma_i}$$

i being the number of iterations,
$q^2 mitt_k = [(q_{maxK} + q_{minK})/2]^2$, and
$\gamma_i$ being a weighting factor.

**Revendications**

1. Procédé d'évaluation des conditions de fonctionnement d'une machine ou d'une installation pour laquelle

on mesure plusieurs fois au moins un paramètre pour former une base de données (6),
qui est constituée de valeurs $(x_1, y_1) ...(x_n, y_n)$ du paramètre,

une qualité (K) d'une extrapolation étant calculée en se fondant sur la base de données (6), **caractérisé en ce que**, dans le procédé, la qualité (K) est une fonction d'au moins deux variables du groupe V, $\Delta I$, S, C,
où

V est un rapport du domaine de valeurs de la base de données (6) sur le domaine d'extrapolation xs qui est

déterminé par $x_n > x1 > x_n$,

$\Delta I$ est l'incertitude x de la courbe d'adaptation (21) dans la direction x,

S est la continuité comme mesure de la variation des valeurs y de la base de données (6) et

C est la constance de l'extrapolation dans le temps.

2. Procédé selon la revendication 1, **caractérisé en ce que** l'évaluation des conditions de fonctionnement est utilisée pour influer de façon appropriée sur le paramètre en fonction de la qualité (K).

3. Procédé selon la revendication 1 ou 2, **caractérisé en ce que** l'évaluation des conditions de fonctionnement permet d'augmenter la sécurité de fonctionnement de la machine (1) ou de l'installation en influant de façon appropriée sur les paramètres en fonction de la qualité (K).

4. Procédé selon la revendication 1 ou 2, **caractérisé en ce que** l'évaluation des conditions de fonctionnement est utilisée pour optimiser le fonctionnement de la machine (1) ou de l'installation.

5. Procédé selon la revendication 3, **caractérisé en ce qu'**on prescrit une valeur limite (18) du paramètre et **en ce qu'**on détermine un intervalle de temps dans lequel il n'y a pas de dépassement par le haut de la valeur limite (18) du paramètre.

6. Procédé selon la revendication 1, **caractérisé en ce que** le choix des variables est effectué de manière à ce que la qualité (K) soit indépendante de la pente d'une courbe d'adaptation à la base de donnée (6).

7. Procédé selon la revendication 1, **caractérisé en ce que** la qualité (K) est normée, notamment par $1-e^{-K}$.

8. Procédé selon la revendication 7, **caractérisé en ce que** la qualité (K) est normée sur un domaine de valeurs allant de 0 à 100%.

9. Procédé selon la revendication 1, **caractérisé en ce que** la qualité (K) est donnée par :

$$K = \frac{V * \Delta I}{S * C} \; .$$

10. Procédé selon la revendication 1 ou 9, **caractérisé en ce que** le rapport (V) du domaine de valeurs de la base de données (6) est donné par $(X_n-X_1)/(X_S-X_1)$.

11. Procédé selon la revendication 1, **caractérisé en ce que**

la base de données (6) est divisée en au moins trois segments (45, 48, 52) ;
l'on calcule pour chaque segment (45, 48, 52) de la base de données (6) une valeur moyenne $g_1$, $g_2$, $g_3$ et une fonction d'adaptation linéaire $y_1$, $y_2$, $y_3$ (36, 39, 42) ayant respectivement les pentes $c_1$, $c_2$, $c_3$ ;
l'on calcule une courbure numérique p

$$p = g_1 - g_2 - 2*g_2 + g_3,$$

 qui reproduit le sens de courbure actuel lié à la variation de pente ;
à partir d'une réserve de courbes dont le type appartient au moins au groupe :

| | | |
|---|---|---|
| fonction linéaire : | $\rightarrow$ | $f(x) = a_0 + a_1 * x$ |
| fonction puissance : | $\rightarrow$ | $f(x) = \ln a_0 + a_1 \ln x$ |
| fonction logarithmique : | $\rightarrow$ | $f(x) = y = a_0 + a_1 * \ln x$ |
| fonction exponentielle : | $\rightarrow$ | $f(x) = \ln y = \ln a_0 + a_1 x$ |

on choisit de façon itérative chaque type de courbe de la fonction d'adaptation et on l'adapte au domaine de valeurs de toute la base de données actuelle (6),

le type de courbe choisi dans la réserve de courbes devant satisfaire les conditions suivantes :

le sens de courbure de la courbe, qui est déterminée à partir de l'extrapolation, doit coïncider avec celui de p et

le quotient $Q_k$ formé par le numérateur (= éventuellement la valeur moyenne pondérée des carrés de la distance entre les valeurs de mesure et la courbe d'extrapolation) et le dénominateur (= carré de la valeur moyenne du domaine de valeurs y de la courbe d'extrapolation dans la région de la fenêtre de données) doit être minimal :

$$Q_k = f(k) = \frac{\sum w_i * (y_i(x_i) - f_k(x_i))^2}{y^2_{moy_k} * \sum w_i} = \min \qquad \text{(i = 1 ...min)}$$

où k est un nombre de types de courbe disponibles (réserve de courbes) pour l'extrapolation, notamment on a $y^2_{moy_k} = [(y_{max_k} + y_{min_k})/2]^2$, $y_i(x_i)$ étant la valeur de mesure au point $x_i$, $f_k(x_i)$ étant la valeur de fonction de $k^{ième}$ type de courbe pour l'extrapolation au point $x_i$, $w_i$ étant un facteur de pondération de chaque valeur de mesure individuelle ou de toutes les valeurs de mesure d'un segment ;

de sorte que la continuité (S) est calculé de la façon suivante :

$$S = \frac{\sum \gamma_i * (C_1 - O_1)^2}{\sum \gamma_i} \quad ;$$

où:

i = 1 ...3 est une numérotation pour les régions de segment,

$\gamma_i$ : facteurs de pondération 1 ...n,

$O_1$ $O_3$ sont les pentes de la $k^{ième}$ courbe choisie (36, 39, 42) pour l'extrapolation au niveau de chaque demi-largeur de segment, et

$C_1$ à $C_3$ sont les pentes des adaptations de segment linéaires.

**12.** Procédé selon la revendication 1, **caractérisé en ce que** l'incertitude sur x est déterminée de la façon suivante :

on choisit une fonction d'extrapolation qui peut se transformer en structures linéaires, donc au moins dans le groupe

| | | |
|---|---|---|
| fonction linéaire : | $\rightarrow$ | $f(x) = a_0 + a_1 * x$ |
| fonction puissance : | $\rightarrow$ | $f(x) = \ln a_0 + a_1 \ln x$ |
| fonction logarithmique : | $\rightarrow$ | $f(x) = y = a_0 + a_1 * \ln x$ |
| fonction exponentielle : | $\rightarrow$ | $f(x) = \ln y = \ln a_0 + a_1 x$ |

on détermine une base de données (6),

la base de données (6) comportant n valeurs x et y corrélées,

on calcule x et y de la base de données (6) ainsi que la grandeur $\Sigma x_i y_i$,

on calcule $s_{xy} = \frac{1}{n-1}\left(\sum x_i y_i - \overline{nxy}\right) \qquad \text{(i = 1...n)}$,

on calcule $s_{x^2} = \frac{1}{n-1}\left(\sum x_i - \overline{x}\right)^2 \qquad \text{(i = 1...n)}$,

on calcule $s_{y^2} = \dfrac{1}{n-1}\left(\sum y_i - \overline{y}\right)^2$ (i = 1…n),

on calcule une pente $b = \dfrac{S_{xy}}{S_x^2}$ ,

on calcule $a = (n-1)(s_y^2 - b^2 s_x^2)$

on détermine une équation d'une droite de régression

$$y = \overline{y} + b(x - \overline{x}),$$

avec un nombre de confiance y on calcule une grandeur F(c)

$$F(c) = \dfrac{1}{2}(1+\gamma) ,$$

avec F(c) et n-2 degrés de liberté (n = nombre de valeurs de mesure) la distribution t (Distribution de Student) donne une valeur c,
on détermine $\Delta$m

$$\dfrac{c\sqrt{a}}{S_x\sqrt{(n-1)(n-2)}} ,$$

de sorte que l'on obtient une incertitude de la pente m :

$$b - \Delta m \leq m \leq b + \Delta m,$$

on détermine les équations de droites (27, 21) avec les pentes b - $\Delta$m, b + $\Delta$m,
on détermine les points d'intersection ($I_{min}$, constante) et ($I_{max}$, constante) des droites avec une parallèle (18) (y = constante), qui correspond à une valeur limite (18),
on détermine des valeurs x correspondantes $I_{max}$ et $I_{min}$, où $I_{max} > I_{min}$,
on calcule $\Delta I = I_{max} - I_{min}$.

**13.** Procédé selon la revendication 11, **caractérisé en ce que** la plage de valeurs de la continuité (S) est dans le domaine 0 et +∞.

**14.** Procédé selon la revendication 1, **caractérisé en ce que** la qualité (K) varie dans le temps et **en ce qu'**une évaluation de la variance dans le temps de la plage d'extrapolation (C) est calculée de la façon suivante :

$$C = \dfrac{\sum \gamma_i * (K(t_1) - q(t))^2}{q_{moy_k}^2 * \sum \gamma_i}$$

i est un nombre d'itérations, $\quad q_{moy_k}^2 = [(q_{max_k} + q_{min_k})/2]^2$ ,

$\gamma_i$ est un facteur de pondération.

$q_{moy_k}^2 = [(q_{max_k} + q_{min_k})/2]^2$ ,

$\gamma_i$ est un facteur de pondération.

# FIG 1

# FIG 2

## FIG 3

## FIG 4

## FIG 5

## FIG 6

FIG 7